# EUROPEAN PATENT SPECIFICATION

(11) **EP 3 045 303 B1**
(45) Date of publication and mention of the grant of the patent: **14.10.2020**
(21) Application number: 15200588.0
(22) Date of filing: 16.12.2015
(51) Int. Cl.: B30B 15/06, B22D 17/22, B21K 5/20, B28B 23/02, C04B 35/80, C04B 35/10, C04B 35/14, C04B 35/66, C04B 35/107

(54) **CERAMIC REFRACTORY INSULATION BLOCK INCLUDING REINFORCING RODS**
FEUERFESTER KERAMISCHER DÄMMBLOCK MIT ARMIERUNGSSTANGEN
BLOC D'ISOLATION RÉFRACTAIRE EN CÉRAMIQUE COMPRENANT DES TIGES DE RENFORT

(30) Priority: 06.01.2015 US 201514590554
(43) Date of publication of application: 20.07.2016
(73) Proprietor: The Boeing Company, Chicago, IL 60606-1596 (US)
(72) Inventor: SANDERS, Daniel G., Chicago, IL 60606 (US); HEFTI, Larry D., Chicago, IL 60606 (US); SCHERGEN, Mark T., Chicago, IL 60606-2016 (US); PHILP, James, Chicago, IL 60606-2016 (US); COMLEY, Peter N., Chicago, IL 60606 (US)
(74) Representative: Shipp, Nicholas

(56) References cited:
- EP-A1- 0 933 178
- GB-A- 758 917
- US-A- 3 461 709
- US-A- 5 638 724
- US-A1- 2003 126 951

## Description

### TECHNOLOGICAL FIELD

An example arrangement relates generally to a ceramic refractory insulation block for a hot press and, more particularly, to a ceramic refractory insulation block including a plurality of reinforcing rods.

### BACKGROUND

During the fabrication of various parts, such as aircraft parts or parts for other applications, a hot press, such as a hot forming press or a superplastic forming press, may be utilized to heat and form the parts. In order to maintain an elevated temperature within the hot press, a hot press may include a plurality of ceramic refractory insulation blocks. For example, ceramic refractory insulation blocks may be utilized to support and insulate the platens which, in turn, support and heat the forming dies. In addition, ceramic refractory insulation blocks may be utilized in the heat shield of a hot press or for other purposes within the hot press.

Over the course of time, the ceramic refractory insulation blocks may crack. With continued usage of the hot press including the ceramic refractory insulation blocks, the cracks may propagate such that the integrity of the ceramic refractory insulation blocks is compromised. In some instances, a ceramic refractory insulation block may crumble or otherwise separate into pieces, thereby reducing both its structural integrity and its insulation properties. As such, the ceramic refractory insulation blocks must generally be replaced during the operational life of a hot press, thereby significantly increasing the operational cost of the hot press and reducing the availability of the hot press since the ceramic refractory insulation blocks are relatively expensive and their replacement is a time consuming process.

The cracking of ceramic refractory insulation blocks and the resulting loss in structural integrity may create other issues within the hot press. With respect to the ceramic refractory insulation blocks that support the platens, the cracking of the ceramic refractory insulation blocks and the resulting loss in structural integrity may allow the platens to bend or otherwise be deformed so as to no longer be flat. The platens are generally expensive as the result of the platens having been custom cast from an exotic material, such as a corrosion-resistant steel (CRES) alloy, that is relatively difficult to machine and to gun drill in order to form the long, lengthwise extending holes for receiving the electric heater rods. Additionally, the platens may be difficult to replace such that the loss of support for the platens as a result of the cracking of the ceramic refractory insulation blocks and the resulting bending of the platens may create substantial financial losses and down time in order to replace the platens that have bent due to the reduction in structural integrity of the ceramic refractory insulation blocks.

EP0933178 describes, in accordance with its abstract, a reinforced ceramic structure, such as a superplastic forming die for forming a metal part, that has a body of cast silica/calcium aluminate or mullite based ceramic material; and a plurality of reinforcing rods, made of monolithic fused oxides of silicon or aluminum, cast into said ceramic body. The rods have a thickness between 1/8 "-2.0" and are spaced apart on centers by about 2-10 times the diameter of the rods. The rods are made of monolithic fused oxides of silicon or aluminum. A process for manufacturing the reinforced ceramic die is described that includes selecting a casting box having internal dimensions equal to desired external dimensions of the ceramic die and having a floor and an open top. A model of the metal part is attached to the floor of the casting box. Pairs of aligned holes are bored in inside surfaces of the casting box, and a reinforcing rod is mounted in each of the pairs of holes. The casting box is filled with a pourable cementitious material to the open top.

### BRIEF SUMMARY

A ceramic refractory insulation block for a hot press according to claim 1 and a method for forming a part according to claim 10 are provided. The ceramic refractory insulation block is reinforced in a manner that reduces the likelihood of cracking and, once cracked, reduces the rate at which the crack will propagate through the ceramic refractory insulation block. Thus, the ceramic refractory insulation blocks of an example arrangement may have a longer lifetime and may correspondingly permit other furnace components, such as the platens, to have a longer lifetime. As such, a hot press employing the ceramic refractory insulation blocks of an example arrangement may undergo fewer repairs and may, instead, remain operational for a longer period of time, thereby reducing the costs incurred for the replacement of ceramic refractory insulation blocks or other furnace components and correspondingly reducing the downtime of the hot press employing the ceramic refractory insulation blocks.

A ceramic refractory insulation block for a hot press is provided that includes a ceramic body, such as a hot press platen assembly or a heat shield, defining a plurality of outer surfaces. Each of the surfaces is a planar surface. The ceramic body also defines a centerline about which the ceramic body is subjected to a bending moment. The ceramic refractory insulation body also includes a plurality of reinforcing rods extending through the ceramic body. The reinforcing rods have a greater flexural strength than the ceramic body. One or more of the plurality of reinforcing rods extend through the ceramic body on each of the opposed sides of the centerline about which the ceramic body is subjected to the bending moment.

The one or more reinforcing rods that extend through the ceramic body on one side of the centerline may have an equal spacing from the centerline as one or more corresponding reinforcing rods that extend through the ceramic body on an opposite side of the centerline. The plurality of reinforcing rods is disposed in an array that includes at least one row of reinforcing rods. The adjacent reinforcing rods of a respective row are spaced apart by 15 to 25 times a diameter of the reinforcing rods. The array may include first and second rows that each includes a plurality of reinforcing rods. In this embodiment, the reinforcing rods of the first row are orthogonal to the reinforcing rods of the second row with the first and second rows being spaced apart by 5 to 25 times a diameter of the reinforcing rods.

In an example arrangement, the outer surfaces of the ceramic body include first and second outer surfaces and the ceramic body defines a central plane at a midpoint between the first and second outer surfaces. In one embodiment in which the array includes at least first and second rows that each include a plurality of reinforcing rods, the reinforcing rods of the first row are positioned a predefined distance from the central plane in one direction and the second row of reinforcing rods is positioned the predefined distance from the central plane in another, opposite direction. In another arrangement, at least one row of reinforcing rods is positioned within the central plane.

In another arrangement, a hot press is provided that includes a press frame and first and second platens carried by the press frame. The hot press also includes first and second forming dies supported by the upper and lower platens, respectively, with the first and second forming dies defining a die cavity configured to form a part. The hot press also includes a ceramic refractory insulation block carried by the press frame. The ceramic refractory insulation block includes a ceramic body defining a plurality of planar outer surfaces and a centerline about which the ceramic body is subjected to a bending moment. The ceramic refractory insulation block also includes a plurality of reinforcing rods extending through the ceramic body. The reinforcing rods have a greater flexural strength than the ceramic body. One or more of the reinforcing rods extend through the ceramic body on each of the opposed sides of the centerline about which the ceramic body is subjected to the bending moment.

The hot press may also include a hot press platen assembly that includes one of the first and second platens and one or more ceramic refractory insulation blocks. Additionally or alternatively, the hot press may include a heat shield that includes one or more ceramic refractory insulation blocks.

The plurality of reinforcing rods is disposed in an array that includes at least one row of reinforcing rods. Adjacent reinforcing rods of a respective row are spaced apart by 15 to 25 times a diameter of the reinforcing rods. The array of an example embodiment may include at least first and second rows that each includes a plurality of reinforcing rods. In this example embodiment, the reinforcing rods of the first row are orthogonal to the reinforcing rods of the second row with the first and second rows being spaced apart by 5 to 25 times a diameter of the reinforcing rods. In an example embodiment, the one or more reinforcing rods that extend through the ceramic body on one side of the centerline have an equal spacing from the centerline as one or more corresponding reinforcing rods that extend through the ceramic body on an opposite side of the centerline.

The outer surfaces of the ceramic body may include first and second outer surfaces and the ceramic body defines a central plane at a midpoint between the first and second outer surfaces. In one arrangement in which the array includes at least first and second rows that each include a plurality of reinforcing rods, the reinforcing rods of the first row are positioned a predefined distance from the central plane in one direction and the second row of reinforcing rods is positioned the predefined distance from the central plane in another, opposite direction. In another arrangement, at least one row of reinforcing rods is positioned within the central plane.

In a further arrangement, a method for forming a part is provided that includes heating first and second forming dies supported by first and second platens, respectively, carried by a press frame of a hot press. The method also includes forming the part within a die cavity defined by the first and second forming dies while the first and second forming dies are heated. Further, the method includes insulating at least a portion of the hot press with one or more ceramic refractory insulation blocks. Each ceramic refractory insulation block includes a ceramic body that defines a plurality of planar outer surfaces and a centerline about which the ceramic body is subjected to a bending moment. Each ceramic refractory insulation block also includes a plurality of reinforcing rods extending through the ceramic body. The reinforcing rods have a greater flexural strength than the ceramic body. One or more of the plurality of reinforcing rods extend through the ceramic body on each of the opposite sides of the centerline about which the ceramic body is subjected to the bending moment.

The plurality of reinforcing rods is disposed in an array that includes at least one row of reinforcing rods. Adjacent reinforcing rods in a respective row are spaced apart by 15 to 25 times the diameter of the reinforcing rods. The array of an example arrangement includes first and second rows that each include a plurality of reinforcing rods. In this arrangement, the reinforcing rods of the first row are orthogonal to the reinforcing rods of the second row with the first and second rows being spaced apart by 5 to 25 times a diameter of the reinforcing rods.

### BRIEF DESCRIPTION OF THE DRAWINGS

Having thus described aspects of the present disclosure in general terms, reference will now be made to the accompanying drawings, which are not necessarily drawn to scale, and wherein:
Figure 1 is a perspective view of a hot press, such as a hot forming press or a superplastic forming press, that includes a heat shield that makes use of ceramic refractory insulation blocks in accordance with an example arrangement of the present disclosure;
Figure 2 is a perspective view of the hot press of Figure 1 in which the heat shield has been removed to show other ceramic refractory insulation platen blocks in accordance with an example arrangement of the present disclosure;
Figure 3 is a cross sectional view of a portion of a hot press including a plurality of ceramic refractory insulation blocks in accordance with an example arrangement of the present disclosure;
Figure 4 is a perspective view of a ceramic refractory insulation block that depicts an array of reinforcing rods disposed in a plurality of rows in accordance with an example arrangement of the present disclosure;
Figure 5 is a perspective view of a ceramic refractory insulation block that includes an array of reinforcing rods and that illustrates the centerline of the ceramic body about which the ceramic body is subjected to a bending moment that is at least partially countered by the plurality of reinforcing rods in accordance with an example arrangement of the present disclosure;
Figure 6 is a cross-sectional view of the ceramic refractory insulation block of Figure 5 taken along line 6-6; and
Figure 7 is a perspective view of a containment form utilized in order to fabricate a ceramic refractory insulation block in accordance with an example arrangement of the present disclosure.

### DETAILED DESCRIPTION

The present disclosure now will be described more fully hereinafter with reference to the accompanying drawings, in which some, but not all aspects are shown. Indeed, the disclosure may be embodied in many different forms and should not be construed as limited to the aspects set forth herein. Rather, these aspects are provided so that this disclosure will satisfy applicable legal requirements. Like numbers refer to like elements throughout.

A ceramic refractory insulation block for a hot press, such as a hot forming press or a superplastic forming press, is disclosed. The ceramic refractory insulation block is reinforced so as to reduce the likelihood of cracking and, in the event of the initiation of a crack, to reduce the likelihood of crack propagation and/or the rate at which the crack propagates. As such, the ceramic refractory insulation block may maintain its structural integrity for a longer period of time, thereby reducing the instances in which the hot press must be taken offline and the ceramic refractory insulation blocks replaced. Additionally, by maintaining the structural integrity of the ceramic refractory insulation blocks, damage to other components of the hot press, such as the platens, may be reduced, thereby further reducing the cost and downtime associated with the repair of these other components of the hot press.

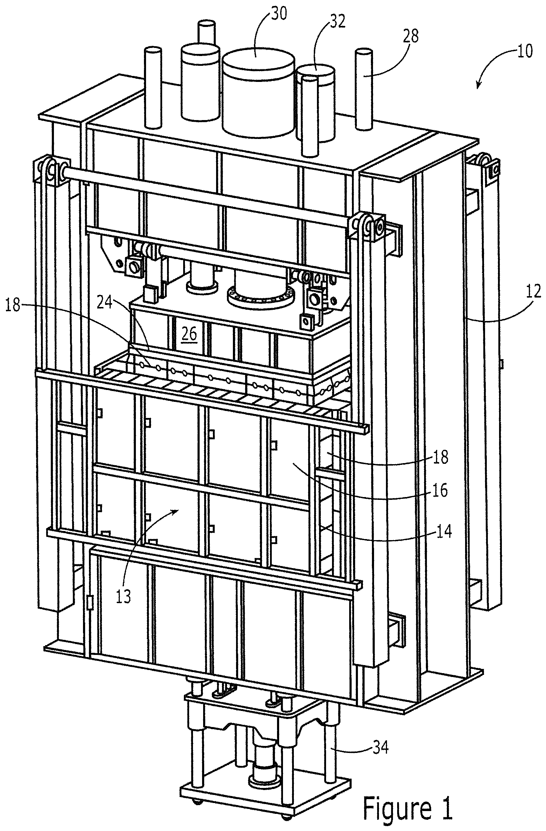

Ceramic refractory insulation blocks may be employed throughout a hot press in a variety of different locations. As shown in Figure 1, one example of a hot press 10, such as a hot forming press or a superplastic forming press, is depicted. The hot press includes a press frame 12. In order to provide insulation to an internal cavity defined by the press frame in which the part is formed, the hot press may include a heat shield 13 mounted to the press frame. Although the heat shield may be constructed in various manners, the heat shield of an example embodiment may include a frame 14 formed of a CRES alloy and sheet metal 16 covering the frame. Within the frame, the heat shield may include one or more ceramic refractory insulation blocks 18 facing the internal cavity within which the part is formed. The ceramic refractory insulation blocks serve to insulate the hot press and to maintain the temperature within the internal cavity during hot forming or superplastic forming operations which are conducted at elevated temperatures, such as 700°F (400°C) to 1700°F (900°C). As described below, ceramic refractory insulation blocks may also be used in other locations throughout the hot press.

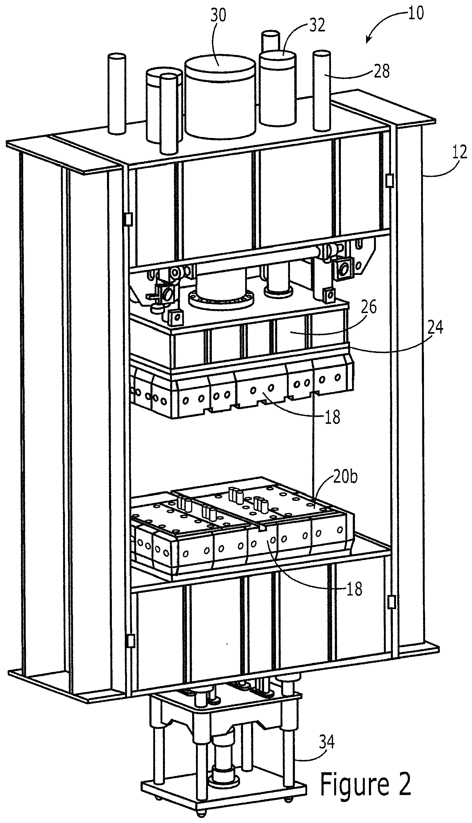

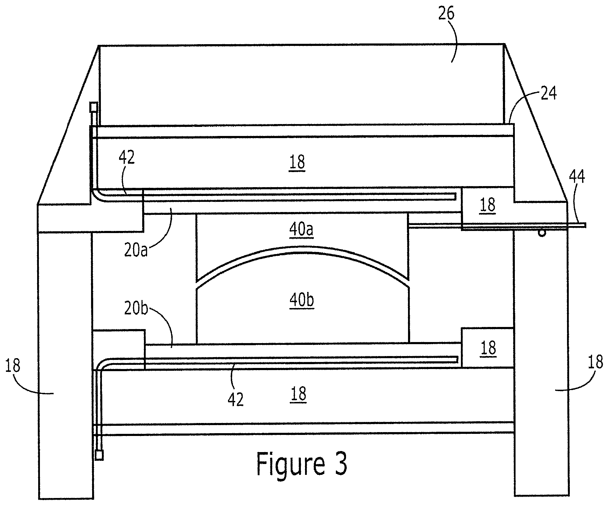

As shown in Figure 2, the hot press 10 of Figure 1 is depicted with the heat shield having been removed for purposes of illustration. The hot press defines an internal cavity within which the dies for forming the part may be disposed. The dies are supported by platens, such as an upper platen 20a and a lower platen 20b as shown in Figure 3 for a hot press having the orientation depicted in Figures 1 and 2. The platens may be fabricated from, for example, CRES alloys. In order to provide insulation for the platens and the forming dies, the hot press may also include one or more ceramic refractory insulation blocks 18 that, in combination with a respective platen, comprise a hot press platen assembly. Thus, an upper hot press platen assembly may include the upper platen and one or more ceramic refractory insulation blocks that surround the upper platen. Similarly, a lower hot press platen assembly may include the lower platen and one or more ceramic refractory insulation blocks that surround the lower platen. The ceramic refractory insulation blocks that comprise a hot press platen assembly are positioned adjacent to and partially surround the respective platen. In this regard, the ceramic refractory insulation blocks of a hot press platen assembly may be positioned about the edge portions of a respective platen so as to insulate the platen. The ceramic refractory insulation blocks of a hot press assembly may also be positioned across the rear surface of the respective platen, that is, the surface of the respective platen opposite the internal cavity in which the part is formed.

As shown in Figures 1 and 2, the hot press 10 of the illustrated arrangement may also include a cooling plate 24 and a bolster plate 26 to support and cool the upper platen 20a (as shown in Figure 3). Further, the hot press may include one or more alignment guides 28 that maintain the platens and, in turn, the forming dies carried by the platens in alignment within the press frame 12 as the platens are moved relative to one another. With respect to the hot press of Figures 1 and 2, the upper platen 20a may be raised and lowered relative to the lower platen 20b. In the illustrated embodiment, the hot press includes a first hydraulic cylinder 30 configured to apply a pressing force urging the first and second platens toward one another and a second, smaller hydraulic cylinder 32 configured to raise and lower the upper platen. The hot press of the illustrated embodiment may also include a die cushion assembly 34.

Referring now to Figure 3, a cross-sectional view of a portion of the hot press 10 depicting a plurality of ceramic refractory insulation blocks 18 is shown. In the illustrated arrangement, upper and lower platens 20a, 20b support upper and lower forming dies 40a, 40b, respectively, which serve to define and form the part. In this regard, the forming dies generally cooperate to define a die cavity in which a workpiece is placed and thereafter formed into a part having a shape as defined by the die cavity. In the illustrated embodiment, for example, the hot press may include a gas line 44 that injects a gas into the die cavity that may serve to facilitate forming of the part, such as in conjunction with a superplastic forming operation. As also shown in Figure 3, the upper and lower platens may be heated which, in turn, may heat the upper and lower forming dies and the part formed between the two die halves. While the upper and lower platens may be heated in various manners, the upper and lower platens of an example embodiment may include electric heater rods 42 disposed within lengthwise extending passageways defined by the respective platens.

As described above, the hot press 10 may include a hot press platen assembly that includes the upper platen 20a and a plurality of ceramic refractory insulation blocks 18 that surround the upper platen, and a hot press platen assembly that includes the lower platen 20b and a plurality of ceramic refractory insulation blocks that surround the lower platen. The ceramic refractory insulation blocks of a hot press platen assembly may be positioned proximate the rear surface of a respective platen, that is, proximate the surface of the respective platen that is opposite the surface that faces into the internal cavity of the hot press. In order to insulate a platen, ceramic refractory insulation blocks of a hot press platen assembly may also be positioned about the edges of the respective platen. The ceramic refractory insulation blocks 18 may also be included within the heat shield 13 of the hot press, such as the front and rear heat shield of the hot press. Ceramic refractory insulation blocks may also comprise other furnace components, such as door seals.

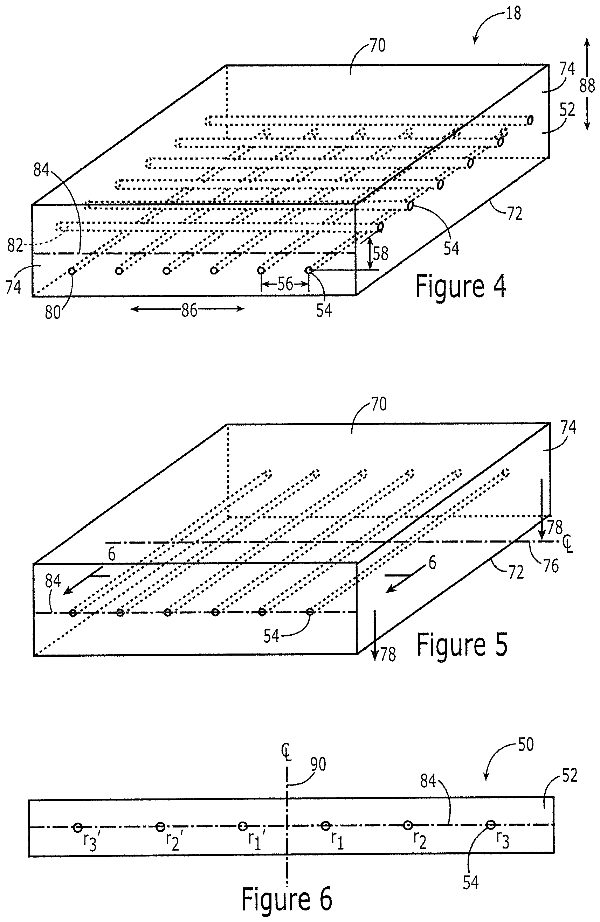

As shown in Figures 4-6, a ceramic refractory insulation block 18 of an example embodiment includes a ceramic body 52 that may be formed of a cast silica/calcium aluminate or mullite based ceramic material. Unlike the forming dies 40 that frequently define a cavity having a complex contour in order to appropriately shape the part to be formed, the ceramic body of a ceramic refractory insulation block may include a plurality of outer surfaces that are each planar surfaces. As shown in Figures 4-6, for example, the ceramic body may include an upper planar surface 70 and a lower planar surface 72 and a plurality, e.g., four, side surfaces 74 that are also planar. As shown in Figure 5, the ceramic body 52 may also define a centerline 76 about which the ceramic body is subjected to a bending moment as indicated by the downwardly extending arrows 78, such as due to the weight of the ceramic body itself and the forces to which the ceramic body is subjected during operation of the hot press 10. A ceramic refractory insulation block may have various sizes, but in one embodiment, has a thickness of between about 4 and 18 inches, such as about 10 inches.

The ceramic refractory insulation block 18 of an example arrangement also includes a plurality of reinforcing rods 54 extending through the ceramic body 52. The reinforcing rods have a greater flexural strength than the ceramic body, such as, for example, a flexural strength that is approximately five times the flexural strength of the ceramic body. For example, reinforcing rods formed of quartz may have a flexural strength of about 10,000 psi (700 Bar), while reinforcing rods formed of alumina may have a flexural strength of 56,000 psi (4,000 Bar). Thus, the reinforcing rods support the ceramic body and maintain the structural integrity of the ceramic refractory insulation block. Although formed of different materials, the reinforcing rods and the ceramic body of an example arrangement are formed of respective materials that have the same or approximately the same coefficient of thermal expansion. In an example arrangement, the plurality of reinforcing rods are formed of monolithic fused oxides of silica or aluminum that are cast into the ceramic body. The rods may be cast into the ceramic body so as to be bonded securely. For example, the reinforcing rods may be textured or profiled to improve the bond with the ceramic body. Alternatively, the reinforcing rods may be coated with a release agent to prevent bonding of the reinforcing rods to the ceramic body such that the reinforcing rods may thereafter translate axially relative to the ceramic body, such as to prevent cracking during drying and curing of the ceramic refractory insulation block. The reinforcing rods may have a diameter of between about ½ inch (1 cm) and 2 inch (5 cm) and may extend across the full length and width of the ceramic body. Although the reinforcing rods may be solid lengthwise extending rods, one or more of the reinforcing rods may be hollow so as to receive an electrical heater element within a cavity defined by the hollow opening for heating the upper and lower platens 20a, 20b and the upper and lower forming dies 40a, 40b.

As shown in Figures 4-6, the plurality of reinforcing rods 54 may be disposed in an array. In this regard, the array of reinforcing rods may include at least one and, in some instances, a plurality of rows of reinforcing rods. For example, the ceramic refractory insulation block 18 of Figure 4 includes two rows of reinforcing rods designated row 80 and row 82. The rows of reinforcing rods may be offset from a central plane 84 of the ceramic refractory insulation block 18 by an equal distance, but in opposite directions. In this regard, the ceramic refractory insulation block may define a central plane at the midpoint between a pair of opposed outer surfaces, e.g., the midpoint of first and second outer surfaces, such as at the midpoint between the upper and lower surfaces 70, 72. As such, one row 80 of reinforcing rods may be positioned a predefined distance from the central plane in one direction, such as in a direction so as to be closer to the lower surface, and a second row 82 of reinforcing rods may be positioned the same predefined distance from the central plane, but in another, opposite direction, such as in a direction so as to be closer to the upper surface. Additionally, the rows of reinforcing rods may be oriented orthogonal to one another, as described below. Although a ceramic refractory insulation block 18 that includes two rows is illustrated and described herein, the ceramic refractory insulation block may include a plurality of rows of reinforcing rods, such as an even number of rows of reinforcing rods with half of the rows spaced from one another in one direction from the central plane and the other half of the rows spaced from one another in the opposite direction from the central plane.

Within a row 80, 82, a plurality of reinforcing rods 54 may be spaced apart from one another in a first direction, while the rows may be spaced apart from one another in a second direction, perpendicular to the first direction. In the arrangement depicted in Figure 4, for example, each row includes a plurality of reinforcing rods spaced apart from one another in a horizontal direction 86 with the rows being spaced apart from one another in a vertical direction 88. However, the rows of reinforcing rods of an array may be disposed in other orientations in other arrangements. In addition, the reinforcing rods of adjacent rows may be disposed orthogonal to one another. For example, the reinforcing rods of the top and bottom rows of the ceramic refractory insulation block of Figure 4 are orthogonal to the reinforcing rods of the middle row.

As shown in Figures 5 and 6, the plurality of reinforcing rods 54 extend through the ceramic body 52 such that one or more of the plurality of reinforcing rods extend across and are disposed on each of the opposed sides of the centerline 76 about which the ceramic body is subjected to a bending moment 78. In this regard, the plurality of reinforcing rods may be oriented to extend continuously from one side of the centerline 76 to the opposite side of the centerline as shown in Figure 5, thereby supporting the ceramic body when subjected to the bending moment about the centerline. As such, the plurality of reinforcing rods provide structural support for the ceramic body by increasing the modulus of rupture as the ceramic body is subjected to a bending moment about the centerline 76.

Additionally, when viewed along the length of reinforcing rods 54 as shown in cross-section in Figure 6, the plurality of reinforcing rods may be disposed in a symmetrical relationship relative to a centerline 90, perpendicular to the centerline 76 in this example arrangement in which the ceramic body 52 is a rectangular solid. In this arrangement in which the reinforcing rods define a lengthwise direction, centerline 90 may be considered a lengthwise centerline, while centerline 76 may be considered a widthwise centerline, perpendicular to the lengthwise centerline. By positioning the reinforcing rods in a symmetrical relationship relative to the lengthwise centerline 90, the reinforcing rods that extend through the ceramic body on one side of the centerline 90 have an equal spacing from the centerline 90 as corresponding reinforcing rods that extend through the ceramic body on the opposite side of the centerline. With reference to Figure 6, the plurality of reinforcing rods of a first row may be disposed such that each rod on one side of the centerline 90 has a corresponding rod on the other side of the centerline 90 that is spaced from the centerline 90 in the opposite direction, but by an equal amount. For example, reinforcing rods r₁ and r₁' are spaced from the centerline 90 by equal amounts in opposite directions. Similarly, reinforcing rods r₂ and r₂' and reinforcing rods r₃ and r₃' are spaced from the centerline 90 by equal amounts in opposite directions.

In the arrangement of Figures 5 and 6, the ceramic refractory insulation block 18 includes a single row of reinforcing rods 54 positioned along a central plane 84 of the ceramic body 52 defined at the midpoint between first and second outer surfaces, such as the upper and lower surfaces 70, 72, of the ceramic body. While the illustrated arrangement depicts a single row of reinforcing rods, the ceramic refractory insulation block may include a plurality of rows of reinforcing rods, such as an odd number of rows of reinforcing rods with one row of reinforcing rods located in the central plane and with half of the remaining rows spaced from one another in one direction from the central plane and the other half of the remaining rows spaced from one another in the opposite direction from the central plane.

In arrangements in which the ceramic body 52 has planar outer surfaces 70, 72 and is intended to provide support, such as to provide support for a platen, such as the upper platen 20a or the lower platen 20b, across its planar rear surface, the ceramic refractory insulating block may not be subjected to side wall forming stresses to the same degree as experienced by a forming die, such as upper forming die 40a or lower forming die 40b, that defines a cavity for forming a part having a complex contour. As such, the reinforcing rods 54 may be spaced relatively far apart from one another while still providing sufficient strength to the ceramic body in order to resist both cracking and crack propagation. In this regard, the reinforcing rods of a respective row 80, 82 may be disposed with the ceramic body so as to extend parallel to one another and to be spaced apart by an equal amount. In this regard, adjacent reinforcing rods of a respective row are spaced apart, such as based upon a center-to-center spacing, of 15 to 25 times the diameter of the reinforcing rods, as indicated by designation 56 in Figure 4. In addition, the rows of the array of reinforcing rods may be spaced apart from one another by 5 to 25 times the diameter of the reinforcing rods, as indicated by designation 58 in Figure 4. By spacing the reinforcing rods in the foregoing manner, the reinforcing rods may provide ample support for the ceramic body so as to resist the initiation and propagation of cracks while permitting the ceramic refractory insulation block to include a greater percentage of the ceramic body which, in turn, increases the insulative properties of the ceramic refractory insulation block 18.

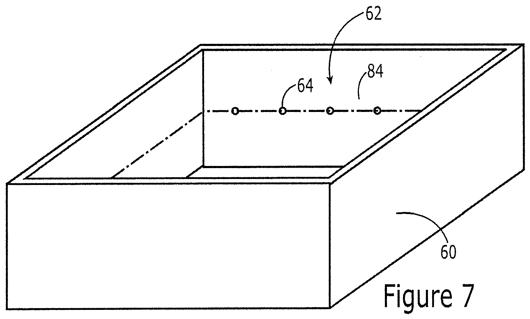

In order to form a ceramic refractory insulation block 18, a containment form 60 may be provided as shown in Figure 7 that defines an internal cavity 62 having a size and shape of the resulting ceramic refractory insulation block. The reinforcing rods 54 may then be placed into the containment box in the same relative locations that will be maintained by the reinforcing rods within the resulting ceramic refractory insulation block. In one arrangement, holes 64 may be formed, such as by being drilled into or through the sidewalls of the containment form at the respective locations of the reinforcing rods. The reinforcing rods may then be placed within the containment box with the ends of the reinforcing rods disposed within respective holes. The reinforcing rods may be secured with respect to the containment form. In an example arrangement, the ends of the reinforcing rods are snugly maintained within the holes by a sealant, such as a rubber gasket or a sealing compound, e.g., Hydro-Cal cement, that fills the holes around the ends of the reinforcing rods. The ceramic material, such as a cast silica/calcium aluminate or mullite based ceramic material, may then be poured into the containment form and subjected to air drying, such as for one to two days. The ceramic refractory insulation block may then be demolded from the containment form and air cooled for three to ten days prior to subjecting the ceramic refractory insulation block to curing in a furnace and a sintering heat treatment. Opposed surfaces, such as the top and bottom surfaces, of the ceramic body 52 may then be ground so as to be flat and to be parallel with one another prior to being installed in a hot press 10.

As described above, a ceramic refractory insulation block 18 for a hot press 10 is provided that is reinforced in a manner that reduces the likelihood of cracking and, once cracked, reduces the rate at which the crack will propagate through the ceramic refractory insulation block. Thus, the ceramic refractory insulation blocks of an example arrangement may have a longer lifetime and may correspondingly permit other furnace components, such as the upper and lower platens 20a, 20b, to have a longer lifetime. As such, a hot press employing the ceramic refractory insulation blocks of an example arrangement may undergo fewer repairs and may, instead, remain operational for a longer period of time, thereby reducing the costs incurred for the replacement of ceramic refractory insulation blocks or other furnace components and correspondingly reducing the downtime of the hot press employing the ceramic refractory insulation blocks.

The following arrangements are also discussed:
A ceramic refractory insulation block for a hot press, the ceramic refractory insulation block comprising: a ceramic body defining a plurality of outer surfaces, wherein each outer surface is a planar surface, wherein the ceramic body also defines a centerline about which the ceramic body is subjected to a bending moment; and a plurality of reinforcing rods extending through the ceramic body, wherein the reinforcing rods have a greater flexural strength than the ceramic body, and wherein one or more of the plurality of reinforcing rods extend through the ceramic body on each of the opposed sides of the centerline about which the ceramic body is subjected to the bending moment.

The one or more reinforcing rods that extend through the ceramic body on one side of the centerline may have an equal spacing from the centerline as one or more corresponding reinforcing rods that extend through the ceramic body on an opposite side of the centerline.

The plurality of reinforcing rods are disposed in an array comprising at least one row of reinforcing rods.

Adjacent reinforcing rods of a respective row are spaced apart by 15 to 25 times a diameter of the reinforcing rods.

The array may comprise at least first and second rows that each comprise a plurality of reinforcing rods. The reinforcing rods of the first row may be orthogonal to the reinforcing rods of the second row with the first and second rows being spaced apart by 5 to 25 times a diameter of the reinforcing rods.

The outer surfaces of the ceramic body may comprise first and second outer surfaces and the ceramic body defines a central plane at a midpoint between the first and second outer surfaces, wherein the array may comprise at least first and second rows that each comprise a plurality of reinforcing rods, and wherein the reinforcing rods of the first row positioned a predefined distance from the central plane in one direction and the second row of reinforcing rods is positioned the predefined distance from the central plane in another, opposite direction.

The outer surfaces of the ceramic body may comprise first and second outer surfaces and the ceramic body defines a central plane at a midpoint between the first and second outer surfaces, wherein at least one row of reinforcing rods is positioned within the central plane.

Also disclosed is a hot press comprising: a press frame; first and second platens carried by the press frame; first and second forming dies supported by the upper and lower platens, respectively, wherein the first and second forming dies define a die cavity configured to form a part; and a ceramic refractory insulation block carried by the press frame, wherein the ceramic refractory insulation block comprises a ceramic body defining a plurality of planar outer surfaces and a centerline about which the ceramic body is subjected to a bending moment and a plurality of reinforcing rods extending through the ceramic body, wherein the reinforcing rods have a greater flexural strength than the ceramic body, and wherein one or more of the plurality of reinforcing rods extend through the ceramic body on each of the opposed sides of the centerline about which the ceramic body is subjected to the bending moment.

The plurality of reinforcing rods of a ceramic refractory insulation block may be disposed in an array comprising at least one row of reinforcing rods.

Adjacent reinforcing rods of a respective row may be spaced apart by 15 to 25 times a diameter of the reinforcing rods.

The array may comprise at least first and second rows that each comprise a plurality of reinforcing rods, and wherein the reinforcing rods of the first row may be orthogonal to the reinforcing rods of the second row with the first and second rows being spaced apart by 5 to 25 times a diameter of the reinforcing rods.

The outer surfaces of the ceramic body may comprise first and second outer surfaces and the ceramic body defines a central plane at a midpoint between the first and second outer surfaces, wherein the array may comprise at least first and second rows that each comprise a plurality of reinforcing rods, and wherein the reinforcing rods of the first row positioned a predefined distance from the central plane in one direction and the second row of reinforcing rods may be positioned the predefined distance from the central plane in another, opposite direction.

The outer surfaces of the ceramic body may comprise first and second outer surfaces and the ceramic body may define a central plane at a midpoint between the first and second outer surfaces, wherein at least one row of reinforcing rods may be positioned within the central plane.

The hot press may further comprise a hot press platen assembly comprising one of the first and second platens and one or more ceramic refractory insulation blocks.

The press frame may comprise a heat shield, and wherein the heat shield comprises one or more ceramic refractory insulation blocks.

The one or more reinforcing rods that extend through the ceramic body on one side of the centerline may have an equal spacing from the centerline as one or more corresponding reinforcing rods that extend through the ceramic body on an opposite side of the centerline.

Also discussed is a method for forming a part, the method comprising: heating first and second forming dies supported by first and second platens carried by a press frame of a hot press; forming the part within a die cavity defined by the first and second forming dies while the first and second forming dies are heated; and insulating at least a portion of the hot press with one or more ceramic refractory insulation blocks, wherein each ceramic refractory insulation block comprises a ceramic body defining a plurality of planar outer surfaces and a centerline about which the ceramic body is subjected to a bending moment and a plurality of reinforcing rods extending through the ceramic body, wherein the reinforcing rods have a greater flexural strength than the ceramic body, wherein one or more of the plurality of reinforcing rods extend through the ceramic body on each of the opposed sides of the centerline about which the ceramic body is subjected to the bending moment.

The plurality of reinforcing rods are disposed in an array comprising at least one row of reinforcing rods.

Adjacent reinforcing rods of a respective row are spaced apart by 15 to 25 times a diameter of the reinforcing rods.

The array may comprise at least first and second rows that each comprise a plurality of reinforcing rods, and wherein the reinforcing rods of the first row may be orthogonal to the reinforcing rods of the second row with the first and second rows being spaced apart by 5 to 25 times a diameter of the reinforcing rods.

Many modifications and other aspects of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific aspects disclosed and that modifications and other aspects are intended to be included within the scope of the appended claims. Although specific terms are employed herein, they are used in a generic and descriptive sense only and not for purposes of limitation.

## Claims

1. A ceramic refractory insulation block (18) for a hot press (10), the ceramic refractory insulation block comprising:
a ceramic body (52) defining a plurality of outer surfaces (70, 72, 74) wherein each outer surface is a planar surface, wherein the ceramic body (52) also defines a centerline (76) about which the ceramic body (52) is subjected to a bending moment (78); and
a plurality of reinforcing rods (54) extending through the ceramic body, wherein the reinforcing rods (54) have a greater flexural strength than the ceramic body (52), and wherein one or more of the plurality of reinforcing rods (54) extend through the ceramic body (52) on each of the opposed sides of the centerline (76) about which the ceramic body (52) is subjected to the bending moment (78), wherein the plurality of reinforcing rods (54) are disposed in an array comprising at least one row (80, 82) of reinforcing rods, and **characterized in that** adjacent reinforcing rods (54) of a respective row (80, 82) are spaced apart by 15 to 25 times a diameter of the reinforcing rods (54).

2. A ceramic refractory insulation block (18) according to Claim 1 wherein the one or more reinforcing rods (54) that extend through the ceramic body (52) on one side of the centerline (76) have an equal spacing from the centerline (76) as one or more corresponding reinforcing rods (54) that extend through the ceramic body (52) on an opposite side of the centerline (76).

3. A ceramic refractory insulation block (18) according to Claim 1 wherein the array comprises at least first (80) and second rows (82) that each comprise a plurality of reinforcing rods (54), and wherein the reinforcing rods (54) of the first row (80) are orthogonal to the reinforcing rods (54) of the second row (82) with the first and second rows (80 and 82) being spaced apart by 5 to 25 times a diameter of the reinforcing rods (54).

4. A ceramic refractory insulation block (18) according to Claim 1 wherein the outer surfaces of the ceramic body (52) comprise first and second outer surfaces (70, 72) and the ceramic body (52) defines a central plane (84) at a midpoint between the first and second outer surfaces (70, 72), wherein the array comprises at least first and second rows (80, 82) that each comprise a plurality of reinforcing rods (54), and wherein the first row of reinforcing rods (54) is positioned a predefined distance from the central plane (84) in one direction and the second row (82) of reinforcing rods (54) is positioned the predefined distance from the central plane (84) in another, opposite direction.

5. A ceramic refractory insulation block (18) according to Claim 1 wherein the outer surfaces (70, 72) of the ceramic body (52) comprise first (70) and second outer surfaces (72) and the ceramic body (52) defines a central plane (84) at a midpoint between the first and second outer surfaces (70, 72), wherein at least one row (80, 82) of reinforcing rods (54) is positioned within the central plane (84).

6. A hot press (10) having the ceramic refractory insulation block of any of Claims 1 to 5.

7. The hot press (10) according to Claim 6 wherein the plurality of reinforcing rods (54) of the ceramic refractory insulation block (18) are disposed in an array comprising at least one row of reinforcing rods.

8. The hot press (10) according to any of Claims 6 to 7 wherein adjacent reinforcing rods (54) of a respective row (80, 82) are spaced apart by 15 to 25 times a diameter of the reinforcing rods.

9. A hot press (10) according to any of Claims 6 to 8 wherein the outer surfaces (70, 72, 74) of the ceramic body (52) comprise first and second outer surfaces (70, 72) and the ceramic body (52) defines a central plane (84) at a midpoint between the first and second outer surfaces (70, 72), wherein at least one row (80, 82) of reinforcing rods (54) is positioned within the central plane (84).

10. A method for forming a part, the method comprising:
heating first and second forming dies (40a, 40b) supported by first and second platens (20a, 20b) carried by a press frame (12) of a hot press (10);
forming the part within a die cavity defined by the first and second forming dies (40a, 40b) while the first and second forming dies are heated; and
insulating at least a portion of the hot press (10) with one or more ceramic refractory insulation blocks (18), wherein each ceramic refractory insulation block (18) comprises a ceramic body (52) defining a plurality of planar outer surfaces (70, 72, 74) and a centerline (76) about which the ceramic body (52) is subjected to a bending moment (78) and a plurality of reinforcing rods (54) extending through the ceramic body (52), wherein the reinforcing rods (54) have a greater flexural strength than the ceramic body (52), wherein one or more of the plurality of reinforcing rods (54) extend through the ceramic body (52) on each of the opposed sides of the centerline (76) about which the ceramic body (52) is subjected to the bending moment (78), wherein the plurality of reinforcing rods (54) are disposed in an array comprising at least one row of reinforcing rods (80, 82), and **characterized in that** adjacent reinforcing rods (54) of a respective row (80, 82) are spaced apart by 15 to 25 times a diameter of the reinforcing rods (54).

11. A method according to Claim 10 wherein the array comprises at least first and second rows (80, 82) that each comprise a plurality of reinforcing rods (54), and wherein the reinforcing rods (54) of the first row (80) are orthogonal to the reinforcing rods (54) of the second row (82) with the first and second rows being spaced apart by 5 to 25 times a diameter of the reinforcing rods.

## Patentansprüche

1. Feuerfester keramischer Dämmblock (18) für eine Heißpresse (10), wobei der feuerfeste keramische Dämmblock aufweist:
einen Keramikkörper (52), der eine Vielzahl von Außenflächen (70, 72, 74) definiert, wobei jede Außenfläche eine planare Fläche ist, wobei der Keramikkörper (52) auch eine Mittellinie (76) definiert, um welche der Keramikkörper (52) einem Biegemoment (78) unterworfen ist; und
eine Vielzahl von Armierungsstangen (54), die sich durch den Keramikkörper erstrecken, wobei die Armierungsstangen (54) eine größere Biegefestigkeit haben als der Keramikkörper (52), und wobei sich eine oder mehrere der Vielzahl von Armierungsstangen (54) auf jeder der gegenüberliegenden Seiten der Mittellinie (76), um die der Keramikkörper (52) dem Biegemoment (78) unterworfen ist, durch den Keramikkörper (52) erstrecken, wobei die Vielzahl von Armierungsstangen (54) in einer Anordnung angeordnet sind, die wenigstens eine Reihe (80, 82) von Armierungsstangen aufweist, und
**dadurch gekennzeichnet, dass**
benachbarte Armierungsstangen (54) einer jeweiligen Reihe (80, 82) um das 15- bis 25-Fache eines Durchmessers der Armierungsstangen (54) beabstandet sind.

2. Feuerfester keramischer Dämmblock (18) nach Anspruch 1, wobei die eine oder die mehreren Armierungsstangen (54), die sich auf einer Seite der Mittellinie (76) durch den Keramikkörper (52) erstrecken, den gleichen Abstand von der Mittellinie (76) haben wie eine oder mehrere korrespondierende Armierungsstangen (54), die sich auf einer gegenüberliegenden Seite der Mittellinie (786) durch den Keramikkörper (52) erstrecken.

3. Feuerfester keramischer Dämmkörper (18) nach Anspruch 1, wobei die Anordnung wenigstens erste (80) und zweite Reihen (82) aufweist, die jeweils eine Vielzahl von Armierungsstangen (54) aufweisen, und wobei die Armierungsstangen (54) der ersten Reihe (80) orthogonal zu den Armierungsstangen (54) der zweiten Reihe (82) sind, wobei die ersten und zweiten Reihen (80 und 82) um das 5- bis 25-Fache eines Durchmessers der Armierungsstangen (54) beabstandet sind.

4. Feuerfester keramischer Dämmblock (18) nach Anspruch 1, wobei die Außenflächen des Keramikkörpers (52) erste und zweite Außenflächen (70, 72) aufweisen und der Keramikkörper (52) eine Mittelebene (84) an einem Mittelpunkt zwischen den ersten und zweiten Außenflächen (70, 72) definiert, wobei die Anordnung wenigstens erste und zweite Reihen (80, 82) aufweist, die jeweils eine Vielzahl von Armierungsstangen (54) aufweisen, und wobei die erste Reihe von Armierungsstangen (54) in einem vordefinierten Abstand von der Mittellinie (84) in einer Richtung positioniert ist und die zweite Reihe (82) von Armierungsstangen (54) den vordefinierten Abstand von der Mittelebene (84) eine einer anderen, entgegengesetzten Richtung positioniert ist.

5. Feuerfester keramischer Dämmblock (18) nach Anspruch 1, wobei die Außenflächen (70, 72) des Keramikkörpers (52) erste (70) und zweite Außenflächen (72) aufweisen und der Keramikkörper (52) eine Mittelebene (84) an einem Mittelpunkt zwischen den ersten und zweiten Außenflächen (70, 72) definiert, wobei wenigstens eine Reihe (80, 82) von Armierungsstangen (54) in der Mittelebene (84) positioniert ist.

6. Heißpresse (10) mit dem feuerfesten keramischen Dämmblock nach einem der Ansprüche 1 bis 5.

7. Heißpresse (10) nach Anspruch 6, wobei die Vielzahl von Armierungsstangen (54) des feuerfesten keramischen Dämmblocks (18) in einer Anordnung angeordnet sind, die wenigstens eine Reihe von Armierungsstangen aufweist.

8. Heißpresse (10) nach einem der Ansprüche 6 bis 7, wobei benachbarte Armierungsstangen (54) einer jeweiligen Reihe (80, 82) um das 15- bis 25-Fache eines Durchmessers der Armierungsstangen beabstandet sind.

9. Heißpresse (10) nach einem der Ansprüche 6 bis 8, wobei die Außenflächen (70, 72, 74) des Keramikkörpers (52) erste und zweite Außenflächen (70, 72) aufweisen und der Keramikkörper (52) eine Mittelebene (84) an einem Mittelpunkt zwischen den ersten und zweiten Außenflächen (70, 72) definiert, wobei die wenigstens eine Reihe (80, 82) von Armierungsstangen (54) in der Mittelebene (84) positioniert ist.

10. Verfahren zum Formen eines Teils, wobei das Verfahren aufweist:
Erhitzen erster und zweiter Formstanzen (40a, 40b), die von ersten und zweiten Platten (20a, 20b) gestützt werden, welche von einem Pressenrahmen (12) einer Heißpresse (10) getragen werden;
Formen des Teils in einer Pressformkavität, die von den ersten und zweiten Formstanzen (40a, 40b) definiert wird, während die ersten und zweiten Formstanzen erhitzt werden; und
Isolieren wenigstens eines Teils der Heißpresse (10) mit einem oder mehreren feuerfesten keramischen Dämmblöcken (18), wobei jeder feuerfeste keramische Dämmblock (18) einen Keramikkörper (52) aufweist, der eine Vielzahl von planaren Außenflächen (70, 72, 74) und eine Mittellinie (76) definiert, um welche der Keramikkörper (52) einem Biegemoment (78) unterworfen ist, und eine Vielzahl von Armierungsstangen (54), die sich durch den Keramikkörper (52) erstrecken, wobei die Armierungsstangen (54) eine größere Biegefestigkeit haben als der Keramikkörper (52), wobei sich eine oder mehrere der Vielzahl von Armierungsstangen (54) auf jeder der gegenüberliegenden Seiten der Mittellinie (76), um die der Keramikkörper (52) dem Biegemoment (78) unterworfen ist, durch den Keramikkörper (52) erstrecken, wobei die Vielzahl von Armierungsstangen (54) in einer Anordnung angeordnet sind, die wenigstens eine Reihe von Armierungsstangen (80, 82) aufweist, und
**dadurch gekennzeichnet, dass**
benachbarte Armierungsstangen (54) einer jeweiligen Reihe (80, 82) um das 15- bis 25-Fache eines Durchmessers der Armierungsstangen (54) beabstandet sind.

11. Verfahren nach Anspruch 10, wobei die Anordnung wenigstens erste und zweite Reihen (80, 82) aufweist, die jeweils eine Vielzahl von Armierungsstangen (54) aufweisen, und wobei die Armierungsstangen (54) der ersten Reihe (80) orthogonal zu den Armierungsstangen (54) der zweiten Reihe (82) sind, wobei die ersten und zweiten Reihen um das 5- bis 25-Fache eines Durchmessers der Armierungsstangen beabstandet sind.

## Revendications

1. Bloc d'isolation réfractaire en céramique (18) pour une presse à chaud (10), le bloc d'isolation réfractaire en céramique comprenant :
un corps en céramique (52) définissant une pluralité de surfaces extérieures (70, 72, 74), dans lequel chaque surface extérieure est une surface plane, le corps en céramique (52) définissant également un axe central (76) autour duquel le corps en céramique (52) est soumis à un moment de flexion (78) ; et
une pluralité de tiges de renfort (54) s'étendant à travers le corps en céramique, dans lequel les tiges de renfort (54) ont une résistance à la flexion supérieure au corps en céramique (52), et dans lequel une ou plusieurs de la pluralité de tiges de renfort (54) s'étendent à travers le corps en céramique (52) sur chacun des côtés opposés de l'axe central (76) autour duquel le corps en céramique (52) est soumis au moment de flexion (78), la pluralité de tiges de renfort (54) étant disposées dans une matrice comprenant au moins une rangée (80, 82) de tiges de renfort, et **caractérisé en ce que** des tiges de renfort adjacentes (54) d'une rangée respective (80, 82) sont espacées de 15 à 25 fois d'un diamètre des tiges de renfort (54).

2. Bloc d'isolation réfractaire en céramique (18) selon la revendication 1, dans lequel l'une ou plusieurs tiges de renfort (54) qui s'étendent à travers le corps en céramique (52) sur un côté de l'axe central (76) ont un espacement par rapport à l'axe central (76) égal à une ou plusieurs tiges de renfort correspondantes (54) qui s'étendent à travers le corps en céramique (52) sur un côté opposé de l'axe central (76).

3. Bloc d'isolation réfractaire en céramique (18) selon la revendication 1, dans lequel la matrice comprend au moins des première (80) et seconde rangées (82) qui comprennent chacune une pluralité de tiges de renfort (54), et dans lequel les tiges de renfort (54) de la première rangée (80) sont orthogonales aux tiges de renfort (54) de la seconde rangée (82), les première et seconde rangées (80 et 82) étant espacées de 5 à 25 fois d'un diamètre des tiges de renfort (54).

4. Bloc d'isolation réfractaire en céramique (18) selon la revendication 1, dans lequel les surfaces extérieures du corps en céramique (52) comprennent des première et seconde surfaces extérieures (70, 72) et le corps en céramique (52) définit un plan central (84) au niveau d'un point médian entre les première et seconde surfaces extérieures (70, 72), dans lequel la matrice comprend au moins des première et seconde rangées (80, 82) qui comprennent chacune une pluralité de tiges de renfort (54), et dans lequel la première rangée de tiges de renfort (54) est positionnée à une distance prédéfinie du plan central (84) dans une direction et la seconde rangée (82) de tiges de renfort (54) est positionnée à la distance prédéfinie par rapport au plan central (84) dans une autre direction opposée.

5. Bloc d'isolation réfractaire en céramique (18) selon la revendication 1, dans lequel les surfaces extérieures (70, 72) du corps en céramique (52) comprennent des première (70) et seconde surfaces extérieures (72) et le corps en céramique (52) définit un plan central (84) au niveau d'un point médian entre les première et seconde surfaces extérieures (70, 72), dans lequel au moins une rangée (80, 82) de tiges de renfort (54) est positionnée à l'intérieur du plan central (84).

6. Presse à chaud (10) ayant le bloc d'isolation réfractaire en céramique selon une quelconque des revendications 1 à 5.

7. Presse à chaud (10) selon la revendication 6, dans laquelle la pluralité de tiges de renfort (54) du bloc d'isolation réfractaire en céramique (18) est disposée dans une matrice comprenant au moins une rangée de tiges de renfort.

8. Presse à chaud (10) selon une quelconque des revendications 6 à 7 dans laquelle des tiges de renfort adjacentes (54) d'une rangée respective (80, 82) sont espacées de 15 à 25 fois d'un diamètre des tiges de renfort.

9. Presse à chaud (10) selon une quelconque des revendications 6 à 8, dans laquelle les surfaces extérieures (70, 72, 74) du corps en céramique (52) comprennent des première et seconde surfaces extérieures (70, 72) et le corps en céramique (52) définit un plan central (84) au niveau d'un point médian entre les première et seconde surfaces extérieures (70, 72), dans laquelle au moins une rangée (80, 82) de tiges de renfort (54) est positionnée à l'intérieur du plan central (84).

10. Procédé destiné à former une pièce, le procédé comprenant :
chauffer des premier et second moules de formage (40a, 40b) supportés par des premier et second plateaux (20a, 20b) portés par un cadre de presse (12) d'une presse à chaud (10) ;
former la pièce à l'intérieur d'une cavité de moule définie par les premier et second moules de formage (40a, 40b) tandis que les premier et second moules de formage sont chauffés ;et
isoler au moins une partie de la presse à chaud (10) avec un ou plusieurs blocs d'isolation réfractaire en céramique (18), dans lequel chaque bloc d'isolation réfractaire en céramique (18) comprend un corps en céramique (52) définissant une pluralité de surfaces extérieures planes (70, 72, 74) et un axe central (76) autour duquel le corps en céramique (52) est soumis à un moment de flexion (78) et une pluralité de tiges de renfort (54) s'étendant à travers le corps en céramique (52), dans lequel les tiges de renfort (54) ont une résistance à la flexion supérieure au corps en céramique (52), dans lequel une ou plusieurs de la pluralité de tiges de renfort (54) s'étendent à travers le corps en céramique (52) sur chacun des côtés opposés de l'axe central (76) autour duquel le corps en céramique (52) est soumis au moment de flexion (78), la pluralité de tiges de renfort (54) étant disposées dans une matrice comprenant au moins une rangée de tiges de renfort (80, 82), et **caractérisé en ce que** des tiges de renfort adjacentes (54) d'une rangée respective (80, 82) sont espacées de 15 à 25 fois d'un diamètre des tiges de renfort (54).

11. Procédé selon la revendication 10, dans lequel la matrice comprend au moins des première et seconde rangées (80, 82) qui comprennent chacune une pluralité de tiges de renfort (54), et dans lequel les tiges de renfort (54) de la première rangée (80) sont orthogonales aux tiges de renfort (54) de la seconde rangée (82), les première et seconde rangées étant espacées de 5 à 25 fois d'un diamètre des tiges de renfort.
